# EUROPÄISCHE PATENTSCHRIFT

(11) **EP 0 637 810 B1**
(45) Veröffentlichungstag und Bekanntmachung des Hinweises auf die Patenterteilung: **15.04.1998**
(21) Anmeldenummer: 94110854.0
(22) Anmeldetag: 13.07.1994
(51) Int. Cl.: G06K 7/08

(54) **Leser für kontaktlose Informationskarten**
Reader for a contactless information card
Lecteur de carte d'information sans contact

(30) Priorität: 03.08.1993 DE 4326029
(43) Veröffentlichungstag der Anmeldung: 08.02.1995
(73) Patentinhaber: AMPHENOL-TUCHEL ELECTRONICS GmbH, D-74080 Heilbronn (DE)
(72) Erfinder: Huis, Heinrich, D-74172 Obereisesheim (DE); Schuder, Bernd, D-74193 Schwaigern (DE)
(74) Vertreter: Becker, Thomas, Dr., Dipl.-Ing.

(56) Entgegenhaltungen:
- EP-A- 0 249 356
- EP-A- 0 472 420
- DE-A- 3 715 199
- DE-A- 4 115 867
- FR-A- 2 610 430
- FR-A- 2 621 147
- FR-A- 2 679 670
- US-A- 4 085 433

## Beschreibung

Die Erfindung betrifft einen Leser für Informationskarten gemäß Oberbegriff von Anspruch 1.

Für unterschiedliche Anwendungen, beispielsweise zur Benutzung von Telefonen, sind Karten bekannt, die beispielsweise mit einem Magnetstreifen oder einem elektronischen Chip ausgerüstet sind, wobei die Magnetstreifen beziehungsweise Chips gespeicherte Informationen an den zugehörigen Leser abgeben und von diesem Informationen empfangen können. Aus der DE 39 35 364 C1 ist eine Chipkarte bekannt, bei der die Energieversorgung und der bidirektionale Datenaustausch über Kontakte bewirkt wird.

Aus der DE 37 21 822 C1 ist eine Chipkarte bekannt, die über kontaktlose, elektromagnetische Energie und/oder Signalübertragung mit einer stationären Schaltungsanordnung zusammenarbeitet. Die für die Übertragung vorgesehene Antennenspule ist dabei konzentrisch um die aktive Fläche des Halbleiterkörpers der integrierten Schaltung angeordnet.

Informationskarten, bei denen der Datenaustausch über Kontakte erfolgt, haben den Nachteil, daß insbesondere die Kontaktfläche der Karte einem mechanischen Abrieb unterliegt, der zu Funktionsstörungen führen kann.

In diesem Zusammenhang sind zwar Leser entwickelt worden, bei denen die leserseitigen Kontakte an einem verfahrbaren Schlitten angeordnet sind, der sich im wesentlichen senkrecht auf die entsprechenden Kontakte der Chipkarte absenkt, so daß es zu keiner Relativbewegung zwischen den Kontakten der Karte und den Kontakten des Lesers kommt.

Derartige Leser sind aber für die Verwendung kontaktloser Informationskarten unbrauchbar.

Aus der bereits genannten DE 39 35 364 C1 ist eine Chipkarte bekannt, die sowohl kontaktbehaftet wie auch kontaktlos funktioniert. Dazu sind neben einem Kontaktfeld Spulen zur Spannungsversorgung und zum Datenaustausch vorgesehen. Insbesondere die Anordnung der Spulen geht dabei jedoch zu Lasten der Bauhöhe des korrespondierenden Lesers.

Die FR-A-2 621 147 beschreibt einen Leser der gattungsgemäßen Art. Der bekannte Leser kann nicht für Informationskarten mit einer Kontaktiereinrichtung verwendet werden.

Der Erfindung liegt die Aufgabe zugrunde, einen Leser für Informationskarten anzubieten, der eine möglichst geringe Bauhöhe aufweist und einen einfachen Anschluß an einen korrespondierenden Steckverbinder ermöglicht, wobei der Leser für kontaktlose Informationskarten ebenso genutzt werden soll wie für Informationskarten mit einer Kontaktiereinrichtung.

Erfindungsgemäß wird dazu ein Leser für Informationskarten mit den Merkmalen des Anspruches 1 vorgeschlagen. Dabei kann der Leser ein solcher mit absenkbarem Kontaktsatz, ein Leser mit einem absenkbaren Schlitten oder ein nicht bewegbarer Leser mit Schleifkontakten sein.

Die mindestens eine Erregerspule ist Bestandteil der gedruckten Schaltung. Auf diese Weise wird die notwendige Bauhöhe für den Leser auf ein Minimum reduziert.

Dadurch, daß die Erregerspule als Bestandteil der gedruckten Schaltung, zum Beispiel bei einem Leser mit absenkbarem Kontaktsatz, auf der Leiterplatte mit dem Schlitten in Richtung auf die Karte abgesenkt wird, sobald die Karte in den Leser geführt wird, wird der Luftspalt im magnetischen Kreis in der Lesestellung minimiert. Gleichzeitig wird der notwendige Energiebedarf reduziert.

Durch die in-situ-Ausbildung der Erregerspule(n) können dabei die elektrischen Anschlußelemente für die Erregerspule(n) über den flexiblen Anschlußbereich der Leiterplatte erfolgen, so daß ein eigener Steckverbinder für die Spule(n) entfällt.

Dieser Vorteil wird vor allem dann besonders deutlich, wenn der Leser so ausgebildet ist, daß er gleichzeitig auch Chipkarten mit einer Kontaktiereinrichtung kontaktieren kann, weil in diesem Fall alle elektrischen Anschlußelemente über ein und denselben flexiblen Anschlußbereich der Leiterplatte in einen gemeinsamen Steckverbinder geführt werden können.

Der flexible Anschlußbereich der Leiterplatte ermöglicht es, auch bei einem stationären Steckverbinder Bewegungstoleranzen des Schlittens auszugleichen.

Nach einer Ausführungsform der Erfindung ist vorgesehen, die Leiterplatte in mindestens zwei, übereinanderliegenden Schichten gefaltet auszubilden. Dabei erfolgt die Faltung mäanderartig.

Je nach Anwendungsbereich kann die gedruckte Schaltung auch mit zwei Erregerspulen ausgebildet sein, so daß einerseits Informationen von der Karte in den Leser und andererseits vom Leser in die Karte übertragbar sind.

Über ein Jochteil erfolgt jeweils der magnetische Rückfluß. Dabei erstrecken sich die Enden des Jochteils durch die Leiterplatte hindurch. Dies ist besonders einfach, weil die gesamte Leiterplatte aus einem flexiblen Bauteil besteht, also Leiterplatte und Anschlußbereich einteilig sind. Der Jochteil kann dabei im Schnitt eine U-Form aufweisen.

Wie oben bereits ausgeführt, bietet die beschriebene Ausführungsform auch die Möglichkeit, den Leser für Informationskarten (Chip-Karten) mit einer Kontaktiereinrichtung zu nutzen.

Zu diesem Zweck weist die Leiterplatte zusätzlich Kontaktstreifen auf, die mit korrespondierenden, in Richtung auf die Karte in ihrer Steckposition vorkragenden Kontakten elektrisch verbunden sind und über den flexiblen Anschlußbereich der Leiterplatte mit Hilfe des genannten Steckverbinders aktivierbar sind.

Mit Ausnahme der konkreten Gestaltung der Leiterplatte entspricht die Kontaktiereinheit des Lesers hier dem Stand der Technik.

In bezug auf die Kontakte, die in der Regel elastisch vorgespannt sind, ergibt sich aufgrund der Positionierung in dem genannten absenkbaren Schlitten ein minimaler Kontaktabrieb im Kontaktfall.

Gleichzeitig wird der Anschluß- und Bauteilaufwand verringert. Der Leser kann dann wechselweise für kontaktlose Informationskarten und Informationskarten mit Kontakten benutzt werden.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert.

Dabei zeigen - jeweils in schematisierter Darstellung -
- Figur 1:: eine Aufsicht auf ein Ausführungsbeispiel eines erfindungsgemäßen Lesers
- Figur 2:: eine schematische Darstellung der Zuordnung des absenkbaren Schlittens zur Karte bei der Ausführungsform nach Figur 1
- Figur 3:: eine mögliche Ausführungsform des Jochs für den magnetischen Rückfluß bei der Ausführungsform nach Figur 1
- Figur 4:: einen teilweisen Schnitt durch eine andere Ausführungsform eines Lesers für eine absenkbare Informationskarte
- Figur 5:: einen teilweisen Schnitt durch eine dritte Leser-variante ohne absenkbare Karte oder Kontakte.

In den Figuren sind gleiche oder gleichwirkende Bauteile mit gleichen Bezugsziffern dargestellt.

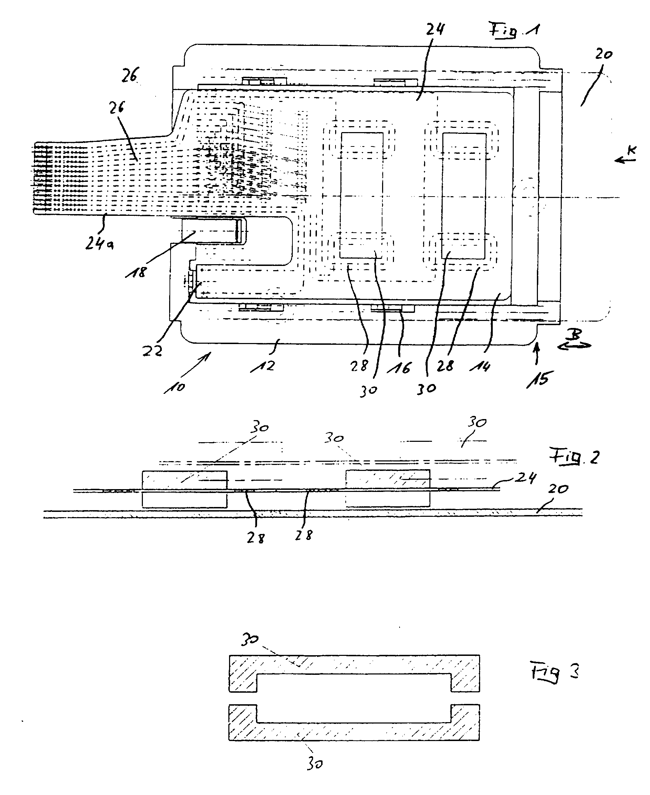

Mit 10 wird in Figur 1 der Leser insgesamt gekennzeichnet. Er besteht aus einem Rahmen 12 und einem im Rahmen 12 geführten und dabei in Pfeilrichtung B sowie in und aus der Zeichenebene bewegbaren Schlitten 14. Die seitlichen Führungsmittel zwischen Rahmen 12 und Schlitten 14 sind mit 16 gekennzeichnet. Da Leser mit dem vorgenannten Aufbau zum Beispiel aus der DE 38 10 275 A1 bekannt sind, bedarf die weitere Beschreibung der Zuordnung von Rahmen 12 und Schlitten 14 hier keiner weiteren Erläuterung. Die Bauteile 12, 14, 16 bilden insgesamt ein Gehäuse 15.

Weiter zu erkennen ist eine sogenannte Kartenbremse 18, die den Weg einer Informationskarte 20 beim Einschieben in den Leser - in Pfeilrichtung K - "abfedert" sowie ein hier mit dem Bezugszeichen 22 beschriebener Endlagenschalter, der den Leser insgesamt aktiviert, sobald die Karte 20 ihre Leseposition erreicht hat.

Auf dem Schlitten 14 ist eine flexible Leiterplatte 24 angeordnet, deren gedruckte Schaltung neben Kontaktstreifen, die hier zusammenfassend mit dem Bezugszeichen 26 dargestellt sind, noch zwei Erregerspulen 28 aufweist.

Die Kontaktstreifen 26 stehen mit hier nicht dargestellten, nach unten (in die Zeichenebene hinein) vorkragenden mechanischen Kontakten in elektrischer Verbindung, zum Beispiel durch Lötpunkte, wobei diese mechanischen Kontakte selbst im Schlitten 14 positioniert sind.

Wie Figur 1 zeigt, verlaufen die Kontaktstreifen in einen flexiblen Anschlußbereich 24a der Leiterplatte 24, wobei der flexible Anschlußbereich 24 über den Rahmen 12 vorsteht.

Neben den Kontaktstreifen 26 verlaufen auf dem flexiblen Anschlußbereich 24a auch die elektrischen Anschlußstreifen für die Spulen 28, so daß alle elektrischen Anschlußelemente über das freie Ende des flexiblen Anschlußbereiches 24a über einen (hier nicht dargestellten) Steckverbinder aktivierbar sind.

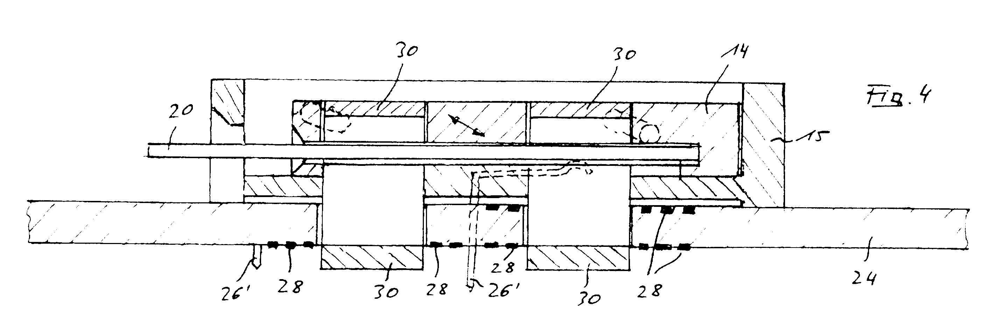

Figur 1 zeigt weiter zwei, den Spulen 28 zugeordnete Jochteile 30, deren geometrische Gestaltung sich insbesondere aus den Figuren 2 und 3 ergibt. Daraus folgt, daß jeder Jochteil 30 im Schnitt U-förmig aufgebaut ist.

Aus Figur 2 folgt, daß der Jochteil 30 die Leiterplatte 24 durchragt.

Figur 2 läßt sich gleichzeitig die Zuordnung des Schlittens 14 beziehungsweise der Leiterplatte 24 zur Informationskarte 20 entnehmen, und zwar einmal im Lesezustand (bei eingesteckter Karte), wobei dieser Zustand mit durchgezogenen Linien dargestellt ist und zum anderen in der Position, bei der keine Informationskarte 20 im Leser 10 einliegt. Diese Position ist gestrichelt dargestellt.

Figur 2 läßt dabei erkennen, daß der Schlitten 14 beim Einschieben der Informationskarte 20 sowohl in Pfeilrichtung K, als auch in Richtung auf die Karte 20 geführt wird. Bei dieser Bewegung werden demzufolge auch die als gedruckte Schaltung auf der Leiterplatte 24 am Schlitten 14 ausgebildeten Spulen 28 mitgeführt, so daß in der Lesestellung der Luftspalt im magnetischen Kreis verringert ist, während er in der inaktiven Position (ohne Karte) sein Maximum erreicht.

Dadurch, daß der Schlitten 14 zusammen mit der Karte 20 abgesenkt wird, bleibt auch der Kartenabrieb (durch die nach unten vorkragenden mechanischen Kontakte) bei gleichzeitig guter magnetischer Kopplung in der aktiven Position gering. Die Einschubrichtung der Karte ist durch den Pfeil K gekennzeichnet.

Gleichzeitig kann der in den Figuren 1 bis 3 dargestellte Leser aber auch im Zusammenhang mit Informationskarten benutzt werden, die über die mechanischen Kontakte des Schlittens 14 kontaktiert werden.

Dabei werden - wie dargestellt - sowohl die mechanischen Kontakte als auch die Spulen 28 über einen einzigen Steckverbinder aktiviert, da die entsprechenden Kontaktstreifen über den gemeinsamen flexiblen Anschlußbereich 24a der Leiterplatte 24 in den Steckverbinder geführt sind.

Das Ausführungsbeispiel nach Figur 4 zeigt einen sogenannten Kombileser für eine absenkbare Informationskarte 20.

Derartige Leser sind als solche bekannt, so daß sie hier nicht näher beschrieben werden. In jedem Fall bestehen sie aus einem Gehäuse 15, einem darin gleitend angeordneten Schlitten 14 und einer am Gehäuse 15 befestigten Leiterplatte 24. Der Schlitten 14 wird in Richtung auf die Leiterplatte 24 abgesenkt, sobald die Karte 20 ihre in Figur 4 dargestellte hintere Anschlagposition erreicht hat und der Benutzer weiter eine Druckkraft auf die Karte 20 ausübt.

Über die Leiterplatte 24 stehen nach unten verschiedene Einlötkontakte 26' vor, von denen hier aus Gründen der besseren Übersichtlichkeit nur einige dargestellt sind. Die Einlötkontakte verlaufen durch die Leiterplatte 24 in das Gehäuse 15 und sind dort fest integriert, so daß die Relativbewegung zwischen der Informationskarte 20 und den Kontakten 26' bei dieser Ausführungsform auf ein Minimum reduziert wird. Die freien Kontaktenden ragen aus dem Gehäuse 15 unter Vorspannung vor, so daß sie gegen die eingeschobenen Karte 20 zur Anlage gelangen. Zwei Jochteile 30 zweier Joche sind beabstandet zueinander in der Leiterplatte 24 angeordnet und durchdringen die Leiterplatte 24 bis in den Bereich des Gehäuses 15. Der jeweils zweite, korrespondierende Jochteil ist im Schlitten 14 angeordnet.

Die Figur zeigt weiter, daß beidseitig des in der Figur links dargestellten Jochs auf der Unterseite der Leiterplatte 24 jeweils eine Erregerspule 28 angeordnet ist, während im Bereich des in der Figur rechts dargestellten Jochs die Erregerspulen 28 als Bestandteile gedruckter Schaltungen sowohl auf der Ober- wie Unterseite der Leiterplatte 24 angeordnet sind.

In gleicher Weise wie anhand des Ausführungsbeispieles nach den Figuren 1 bis 3 beschrieben, wird auch bei diesem Leser der Vorteil einer geringen Bauhöhe und ein einfacher Anschluß über die Einlötkontakte 28' an einen korrespondierenden Steckverbinder ermöglicht. Darüber hinaus ermöglicht der Leser die Übertragung hoher Energien, die durch die Anordnung von Erregerspulen auf zwei Seiten der Leiterplatte beziehungsweise der zugehörigen gedruckten Schaltung weiter optimiert wird.

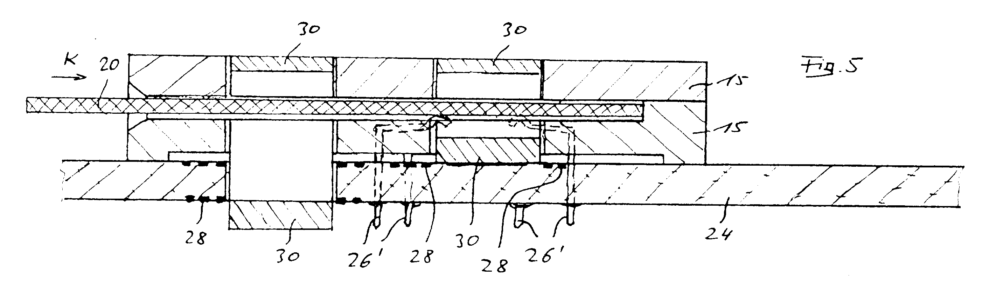

Die Ausführungsform nach Figur 5 ähnelt im wesentlichen der nach Figur 4 mit der Maßgabe, daß das Gehäuse 15 insgesamt fest angeordnet ist und anstelle des absenkbaren Schlittens 14 einen Gehäusedeckel aufweist. Die in Pfeilrichtung K eingeschobene Karte 20 mit der integrierten Information wird dabei in die in der Figur dargestellten Endlage gebracht. Die elektromagnetische Energie wird auch hier über die Anordnung entsprechender Joche und Erregerspulen 28 übertragen. Die beiden, jeweils zweiteiligen Joche sind dabei in Figur 5 in unterschiedlicher Geometrie dargestellt. Während der untere Abschnitt des linken Jochs auf die Unterseite der Leiterplatte 24 gelötet ist, ist der obere Abschnitt des linken Jochs im Gehäusedeckel integriert. Dies gilt auch für den oberen Abschnitt des rechten Jochs, dessen unterer Abschnitt auf die Oberseite der Leiterplatte 24 gelötet ist.

Umgekehrt zum Ausführungsbeispiel nach Figur 4 ist die Erregerspule 28 im Bereich des linken Jochs beidseitig der Leiterplatte 24 in entsprechenden gedruckten Schaltungen integriert, während die rechte Erregerspule 28 lediglich auf der Oberseite der Leiterplatte 24 verläuft.

Auch bei den Ausführungsformen nach den Figuren 4 und 5 ist es möglich, zur Übertragung höherer Energien mehrere Leiterplatten mit dazwischen angeordneten Isolierschichten vorzusehen oder aber auf der Ober- und Unterseite der Leiterplatte flexible Leiterbahnen analog dem Ausführungsbeispiel nach den Figuren 1 bis 3 anzuordnen, gegebenenfalls auch in mäanderförmig gefalteten Lagen, in jedem Fall aber mit den in die gedruckten Schaltungen integrierten Erregerspulen und zugehörigen Jochen.

## Patentansprüche

1. Leser für Informationskarten (20), mit einer gedruckten Schaltung und elektrischen Anschlußkontakten der gedruckten Schaltung, wobei die gedruckte Schaltung mindestens eine Spule (28) zur kontaktlosen Übertragung von Energie und Daten zwischen der gedruckten Schaltung und einem Informationsträger auf der Informationskarte (20) aufweist, gekennzeichnet durch:
mindestens ein erstes Jochteil für den magnetischen Rückfluß der Spule (28) im Bereich der gedruckten Schaltung und ein zweites gegenüberliegendes Jochteil für den magnetischen Rückfluß in einem gehäuseseitigen Abschnitt des Lesers, wobei die Enden des ersten Jochteils sich durch die Leiterplatte (24) hindurcherstrecken und die Jochteile so angeordnet sind, daß eine Informationskarte zwischen die Jochteile eingeschoben werden kann und die Leiterplatte (24) ein flexibles Bauteil ist, das die gedruckte Schaltung und zusätzliche Kontaktstreifen aufweist.

2. Leser nach Anspruch 1 mit einem, beim Einschieben der Informationskarte (20) in Richtung auf die Informationskarte(20) absenkbaren Schlitten (14), an dem die Leiterplatte (24) befestigt ist, wobei die Kontaktstreifen (26) über einen flexiblen Anschlußbereich (24a) der Leiterplatte (24) aus dem Leser (10) herausgeführt sind.

3. Leser nach Anspruch 1 oder 2, bei dem die Leiterplatte (24) in mindetens zwei, übereinanderliegenden Schichten gefaltet ausgebildet ist.

4. Leser nach einem der Ansprüche 1 bis 3, bei dem die Leiterplatte (24) zwei beabstandet nebeneinanderliegende Spulen (28) aufweist.

5. Leser nach einem der Ansprüche 1 bis 4, bei dem die Kontaktstreifen (26) mit korrespondierenden, in Richtung auf die Informationskarte (20) in ihrer Steckposition vorkragenden Kontakten (26') elektrisch verbindbar sind und über den flexiblen Anschlußbereich (24a) der Leiterplatte (24) über einen Steckverbinder aktivierbar sind.

6. Leser nach Anspruch 5, bei dem die elektrischen Anschlußstreifen der Spule(n) (28) parallel zu den Kontaktstreifen (26) auf dem gemeinsamen flexiblen Anschlußbereich (24a) der Leiterplatte (24) verlaufen.

7. Leser nach Anspruch 1 mit einem festen Gehäuse (15) zur Aufnahme einer Informationskarte (20) und einer, am Gehäuse (15) befestigten Leiterplatte (24) bei dem die Spule(n) (28) auf der der Informationskarte (20) zugewandten und/oder der der Informationskarte (20) abgewandten Oberfläche der Leiterplatte (24) angeordnet ist (sind).

8. Leser nach Anspruch 7, bei dem das Gehäuse (15) einen in Richtung auf die Leiterplatte (24) absenkbaren Schlitten (14), der die Informationskarte (20) aufnimmt, aufweist

9. Leser nach Anspruch 7 oder 8, bei dem die Leiterplatte (24) aus einem Grundkörper besteht, der ein- oder beidseitig mit einer Folie beschichtet ist, die die gedruckte Schaltung und die Spule(n) (28) aufweist.

## Claims

1. A reader for data cards (20), comprising a printed circuit and electrical connecting contacts of said printed circuit, wherein said printed circuit comprises at least one coil (28) for contactless transmission of energy and data between the printed circuit and a data medium on the data card (20), characterized by at least a first yoke part for the magnetic backflow of the coil (28) in the area of the printed circuit and a second opposed yoke part for the magnetic backflow in a part of the reader arranged in said housing, wherein the ends of the first yoke part extend through a printed circuit board (24) and the yoke parts being arranged in such a way that a data card may be inserted between the yoke parts and the printed circuit board (24) being a flexible construction element comprising the printed circuit and further contact strips.

2. A reader according to claim 1 with a carriage (14) arranged to descend towards the data card (20) when inserting the data card (20), on which carriage the printed circuit board (24) being fixed, wherein the contact strips (26) extend out of the reader (10) via a flexible connection zone (24a) of the printed circuit board (24).

3. A reader according to claim 1 or 2, wherein the printd circuit board (24) is folded to form at least two superposed layers.

4. A reader according to one of claims 1 to 3, wherein the printed circuit board (24) comprises two mutually spaced adjacent coils (28).

5. A reader according to one of claims 1 to 4, wherein the contact strips (26) are electrically connectable to corresponding contacts (26') projecting towards the data card (20) in their inserted position and may be activated by the flexible connecting zone (24a) of the printed circuit board (24) by a plug connector.

6. A reader according to claim 5, wherein the electrical connecting strips of the coil(s) (28) run parallel to the contact strips (26) on the common flexible connecting zone (24a) of the printed cicuit board (24).

7. A reader according claim 1 comprising a stationary housing (15) arranged to receive a data card (20) and a printed circuit board (24) fixedly secured to the housing (15) wherein the coil(s) (28) is (are) arranged on the surface of the printed circuit board (24) which faces the data card (20) and/or which faces away from the data card (20).

8. A reader according to claim 7, wherein the housing (15) comprises a carriage (14) arranged to descend towards the printed circuit board (24) and receiving the data card (20).

9. A reader according to claim 7 or 8, wherein the printed circuit board (24) consists of a base body, coated on one or on both sides with a foil comprising the printed circuit and the coil(s) (28).

## Revendications

1. Lecteur de cartes d'informations (20), comprenant un circuit imprimé et des contacts de connexion électriques sur le circuit imprimé, le circuit imprimé comprenant au moins une bobine (28) pour la transmission sans contact de l'énergie et des données entre le circuit imprimé et un support d'informations sur la carte d'informations (20), caractérisé par au moins un premier inducteur pour le reflux magnétique de la bobine (28) dans la zone du circuit imprimé et un deuxième inducteur opposé pour le reflux magnétique dans une partie du lecteur du côté du boîtier, les extrémités du premier inducteur s'étendant sur la plaquette de circuit imprimé (24) et les inducteurs étant disposés de telle sorte qu'il est possible d'insérer une carte d'informations entre les inducteurs et que la plaquette de circuit imprimé (24) est une pièce flexible qui comporte le circuit imprimé et des lames de contact supplémentaires.

2. Lecteur de cartes selon la revendication 1, caractérisé par un chariot (14) susceptible d'être abaissé en direction de la carte d'informations (20) au moment de l'introduction de ladite carte d'informations (20), ledit chariot étant fixé sur la plaquette de circuit imprimé (24), les lames de contact (26) pouvant être guidées hors du lecteur (10) par l'intermédiaire d'une zone de connexion (24a) flexible sur la plaquette de circuit imprimé (24).

3. Lecteur de cartes selon la revendication 1 ou 2, caractérisé en ce que la plaquette de circuit imprimé (24) est conçue sous une forme pliée avec au moins deux couches superposées.

4. Lecteur de cartes selon l'une quelconque des revendications 1 à 3, caractérisé en ce que la plaquette de circuit imprimé (24) comprend deux bobines (28), disposées à une distance déterminée l'une de l'autre.

5. Lecteur de cartes selon l'une quelconque des revendications 1 à 4, caractérisé en ce que les lames de contact (26) peuvent être reliées par voie électrique avec des contacts (26') correspondants qui, dans leur position de connexion, forment des saillies dirigées vers la carte d'informations (20), et lesdites lames de contact peuvent être activées par la zone de connexion flexible (24a) de la plaquette de circuit imprimé (24) par l'intermédiaire d'un connecteur multibroches.

6. Lecteur de cartes selon la revendication 5, caractérisé en ce que les lames de connexion électriques de la/des bobine(s) (28) sont disposées parallèlement aux lames de contact (26) sur la zone de connexion (24a) flexible commune de la plaquette de circuit imprimé (24).

7. Lecteur de cartes selon la revendication 1, caractérisé par un boîtier fixe (15) destiné à recevoir la carte d'informations (20), et une plaquette de circuit imprimé (24) fixée contre le boîtier (15), la/les bobine(s) (28) étant disposée(s) dans ledit lecteur sur la surface de la plaquette de circuit imprimé (24) orientée vers la carte d'informations (20) et/ou opposée à la carte d'informations (20).

8. Lecteur de cartes selon la revendication 7, caractérisé en ce que le boîtier (15) comprend un chariot (14), susceptible d'être abaissé en direction de la plaquette de circuit imprimé (24), et destiné à recevoir la carte d'informations (20).

9. Lecteur de cartes selon la revendication 7 ou 8, caractérisé en ce que la plaquette de circuit imprimé (24) est constituée par un corps de base, revêtu sur une face ou sur les deux faces avec une feuille qui comporte le circuit imprimé et la/les bobine(s) (28).
